# FASCICULE DE BREVET EUROPEEN

(11) **EP 1 018 774 B1**
(45) Date de publication et mention de la délivrance du brevet: **19.11.2003**
(21) Numéro de dépôt: 99403219.1
(22) Date de dépôt: 20.12.1999
(51) Int. Cl.: H01M 8/04

(54) **Procédé de purge de circuit de gaz de pile à combustible, et dispositif de mise en oeuvre de ce procédé**
Gasspülverfahren des Gaskreislaufes einer Brennstoffzelle und Vorrichtung zur Durchführung des Verfahrens
Purging method of the gas circuit of a fuel cell and device for realising the same

(30) Priorité: 05.01.1999 FR 9900022
(43) Date de publication de la demande: 12.07.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Charlat, Pierre, 38250 Lans en Vercors (FR)
(74) Mandataire: Le Moenner, Gabriel

(56) Documents cités:
- EP-A- 0 596 366
- EP-A- 0 596 367
- PATENT ABSTRACTS OF JAPAN vol. 014, no. 002 (E-868), 8 janvier 1990 (1990-01-08) & JP 01 251560 A (FUJI ELECTRIC CO LTD), 6 octobre 1989 (1989-10-06)
- PATENT ABSTRACTS OF JAPAN vol. 009, no. 015 (E-291), 22 janvier 1985 (1985-01-22) & JP 59 165376 A (HITACHI SEISAKUSHO KK), 18 septembre 1984 (1984-09-18)
- PATENT ABSTRACTS OF JAPAN vol. 007, no. 200 (E-196), 3 septembre 1983 (1983-09-03) & JP 58 100371 A (HITACHI SEISAKUSHO KK), 15 juin 1983 (1983-06-15)
- PATENT ABSTRACTS OF JAPAN vol. 1996, no. 10, 31 octobre 1996 (1996-10-31) & JP 08 153534 A (JAPAN MARINE SCI &TECHNOL CENTER; MITSUBISHI HEAVY IND LTD), 11 juin 1996 (1996-06-11)

## Description

L'invention concerne un procédé de purge des circuits de gaz des piles à combustible, destiné à évacuer de ces circuits, l'eau à l'état liquide qui pourrait s'y trouver, ainsi éventuellement que les gaz inutilisés ou autres que celui que le circuit est destiné à canaliser, par exemple de l'azote dans les circuits destinés à la circulation d'hydrogène des piles hydrogène-air ; elle concerne également un dispositif de mise en oeuvre de ce procédé.

Dans les piles à combustible actuelles à l'anode desquelles de l'hydrogène est consommé, une partie de l'eau produite côté cathode de la pile passe à travers la membrane et vient s'accumuler dans le compartiment destiné à l'hydrogène. Afin de chasser cette eau, il est nécessaire de procéder régulièrement à des purges du circuit d'hydrogène. La fréquence des purges nécessaires dépend beaucoup de la pile, et est de l'ordre de quelques secondes à quelques minutes. En l'absence de purge, on peut constater une dégradation progressive des performances de la pile. Les purges permettent de retrouver approximativement les performances initiales ; elles permettent de plus d'éliminer l'azote qui se concentre dans le compartiment pour l'hydrogène en diffusant à travers la membrane, ainsi que les éventuelles impuretés présentes dans l'hydrogène.

Actuellement, les purges du circuit d'hydrogène des piles à combustible sont effectuées vers l'extérieur, et il en résulte une perte d'hydrogène ; pour limiter cette perte, il est courant de limiter le débit à la sortie de la pile ; il ne faut cependant pas trop limiter ce débit, car les purges perdent de leur efficacité si le débit d'hydrogène à la sortie n'est pas suffisant ; les pertes totales d'hydrogène ne pouvant être réduites au dessous de quelques pour cent, cela diminue d'autant le rendement en combustible. Il a été envisagé de faire fonctionner la pile en "régime fermé", et de réinjecter l'hydrogène à l'entrée de celle-ci à l'aide d'un circulateur ; il est ainsi possible de faire fonctionner la pile avec des purges beaucoup plus espacées, servant à éliminer l'azote provenant de la partie cathode dans le cas des piles ou le comburant est de l'oxygène fourni par une circulation d'air ; un autre avantage de la recirculation est que le brassage des gaz permet une meilleure répartition de l'hydrogène lorsqu'il y a beaucoup d'azote, et améliore le fonctionnement avec un mélange d'hydrogène-azote, en évitant un phénomène de stratification.

La mise en oeuvre d'une recirculation souffre cependant d'inconvénients : l'un est qu'un recirculateur est une machine tournante complexe, soumise à des conditions de fonctionnement délicates (présence possible d'eau à l'état liquide résultant d'une condensation) ; un autre inconvénient est qu'une circulation continue ne permet pas toujours d'éliminer totalement l'eau à l'état liquide des cellules, car le mouvement de gaz créé n'est pas toujours suffisamment brutal.

L'invention a pour but de créer des purges-brutales (c'est-à-dire avec une chute de pression relativement importante et rapide), tout en limitant autant que cela est possible les pertes en gaz du circuit purgé, par exemple les pertes en hydrogène dans les circuits d'hydrogène, et les pertes en oxygène dans les circuits d'oxygène.

A cette fin, l'invention concerne un procédé de purge de circuit de gaz de pile à combustible selon la Revendication 1.

Le procédé peut de plus présenter une ou plusieurs des caractéristiques suivantes :
- pour réduire l'écart de pressions entre la pile et la capacité, on interrompt l'arrivée de gaz provenant de l'alimentation à l'entrée de la pile, puis on diminue la pression dans la capacité et dans la pile, typiquement jusqu'au voisinage de la pression atmosphérique, en laissant la pile consommer du gaz de la pile et de la capacité sans réalimenter la pile en gaz, puis on réalimente la pile pour faire remonter la pression dans celle-ci, et enfin on remet en communication la pile et la capacité en dégageant les moyens de liaison.

L'invention concerne également un dispositif selon la Revendication 8.

Les documents EP-A-0596366, JP 59 165376 ou JP 58 100371 décrivent des dispositifs à pile et combustible et capacité de sortie selon le préambule de la Revendication 8.

D'autres caractéristiques et avantages de l'invention ressortiront de la description qui va suivre, de modes de mise en oeuvre et de formes de réalisation de l'invention, donnés à titre d'exemples non limitatifs et illustrés par les dessins joints dans lesquels :
- les figures 1 à 7 sont des schémas par blocs respectivement de sept dispositifs de mise en oeuvre du procédé selon l'invention, sur lesquels les mêmes références numériques sont affectées aux éléments se correspondant d'une figure à une autre, et
- la figure 8 est une courbe représentative de la tension délivrée par une pile à combustible en fonction du temps écoulé depuis sa mise en service, respectivement pour une pile à laquelle on ne fait pas subir de purge, pour une pile purgée périodiquement selon la technique antérieure, et pour une pile purgée périodiquement selon l'invention.

Les figures montrent une pile à combustible 1, comportant une entrée 11 de circuit de gaz par laquelle un gaz permettant le fonctionnement de la pile et provenant d'une alimentation en gaz (non représentée) est introduit... dans celle-ci, et une sortie 12 d'évacuation de gaz ou de purge par laquelle une éventuelle partie résiduelle de gaz qui n'a pas été utilisée, ainsi que de l'eau à l'état liquide qui a traversé la membrane de la pile, sont évacués, cet éventuel gaz résiduel et cette eau constituant des obstacles à la libre circulation du gaz neuf. Dans les exemples qui suivent, le circuit de gaz est un circuit d'hydrogène, et l'on peut avoir, en tant que gaz résiduels, de l'hydrogène, et comme on le verra de l'azote.

Selon l'invention, la sortie 12 de la pile 1 est reliée à une entrée d'une capacité 2 dont le volume est de l'ordre de celui du compartiment anodique de la pile, par des moyens de liaison 3 comprenant un conduit 30. A intervalles réguliers ou non, on égalise approximativement les pressions dans au moins une région de référence de la pile située entre entrée 11 et sortie 12, et de la capacité, à une valeur P ; puis on diminue la pression de gaz au moins dans la capacité 2, ensuite on établit, à partir de gaz provenant de l'alimentation, un courant de gaz à croissance rapide, passant par les moyens de liaison, de la pile à la capacité, afin de transporter simultanément de l'eau à l'état liquide contenue dans la pile, dans la capacité ; après quoi, on évacue l'eau à l'état liquide de la capacité.

Dans beaucoup de cas, il est pratique que, la valeur P étant supérieure à la pression atmosphérique, la valeur de pression pour laquelle on établit le courant de gaz soit approximativement égale à la pression atmosphérique.

Les valeurs qui suivront, données à titre d'exemple, correspondent à une pile à combustible de 30kW et dont le volume interne est de 24 litres.

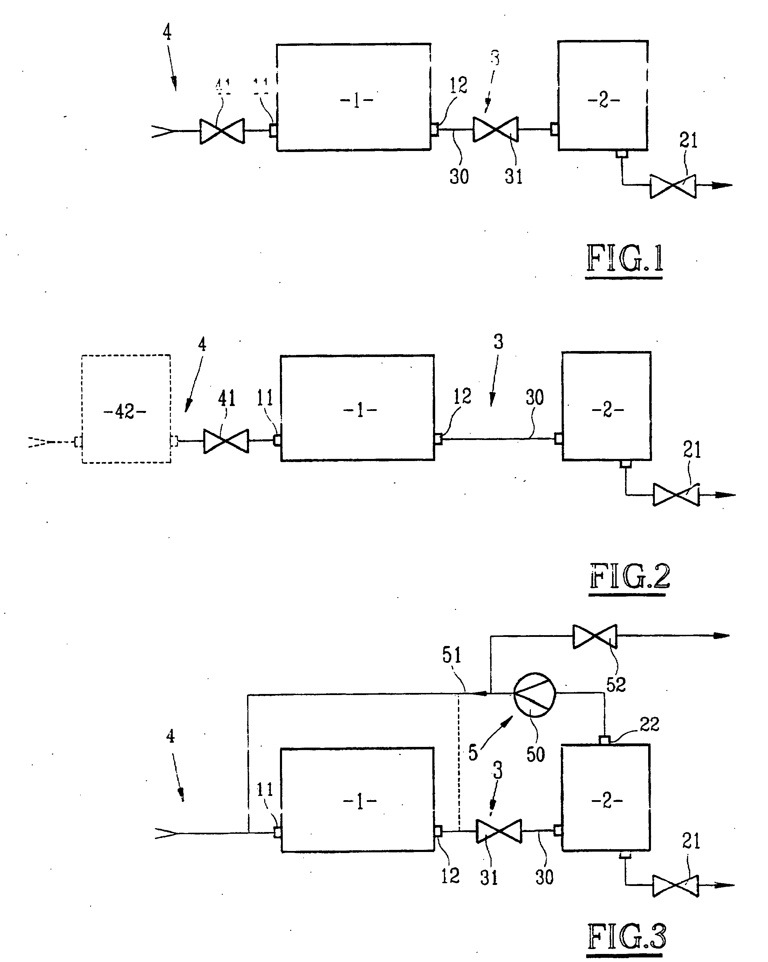

Sur la figure 1, les moyens de liaison 3 comprennent, outre le conduit 30 de sortie de la pile, une vanne 31 de sortie interposée dans ce conduit, et présentent des pertes de charge aussi faibles que possible ; en fonctionnement normal (entre les purges), cette vanne 31 peut être ouverte ou fermée ; dans le circuit d'entrée 4 de la pile 1 reliant la pile à une alimentation en gaz (non représentée), une vanne 41 est raccordée à l'entrée 11 de la pile ; en fonctionnement normal (entre les purges), cette vanne 41 est ouverte. En vue de procéder à la purge, on ouvre la vanne 31 de sortie si elle est initialement fermée, puis, successivement
- on interrompt l'arrivée de gaz provenant de l'alimentation, à l'entrée 11 de la pile, et pour cela on ferme la vanne d'entrée 41 ; par suite de la consommation du gaz présent par la pile, qui n'est pas réalimentée, la pression qui était initialement P dans la pile 1 et la capacité 2 diminue jusqu'à P-ΔP ; dans l'exemple choisi, la chute de pression ΔP est de l'ordre de 0,1 bar toutes les deux secondes ;
- quand ΔP atteint une valeur prédéterminée de l'ordre de 0,1 bar à 0,6 bar, on isole la capacité de la pile et pour cela on ferme la vanne de sortie 31, et on réalimente la pile et pour cela on ouvre immédiatement la vanne d'entrée 41, ce qui entraîne une remontée de pression dans la pile 1 ;
- enfin, quand la pression dans la pile 1 a retrouvé sa valeur initiale P, on remet en communication la pile et la capacité et pour cela on ré-ouvre la vanne de sortie 31, ce qui provoque un courant de gaz à croissance rapide vers la pile et, en passant par les moyens de liaison 3, de la pile à la capacité, transportant de l'eau à l'état liquide contenue dans la pile, jusque dans la capacité 2 ; il suffit ensuite de purger la capacité pour en évacuer l'eau, au moyen d'un organe de purge 21 pouvant être également une vanne.

Sur la figure 2, les moyens de liaison 3 comprennent un conduit de sortie 30 mais pas de vanne de sortie, car les pertes de charge du circuit d'entrée 4 comportant la vanne d'entrée 41 sont supposées suffisamment faibles pour ne pas opposer de limitation aux transferts de gaz. Dans ce cas, en vue de la purge, on interrompt l'arrivée de gaz à l'entrée de la pile et pour cela on ferme la vanne d'entrée 41, on attend comme dans le cas de la figure 1 que la pression baisse de ΔP dans la pile 1 et dans la capacité 2, et on réalimente la pile et pour cela on ouvre la vanne d'entrée 41, ce qui provoque un courant de gaz à croissance rapide vers la pile, dans la pile, et de la pile à la capacité, transportant de l'eau contenue dans la pile. Si les pertes de charge dans le circuit d'entrée 4 sont trop élevées, une capacité tampon 42 peut en variante être disposée dans ce circuit, en amont de la vanne d'entrée 41 (en traits interrompus sur la figure 2), pour emmagasiner du gaz neuf en quantité et à une pression prédéterminées.

Dans les deux exemples qui viennent d'être décrits, la fréquence des purges de la pile 1 n'est limitée que par la rapidité de la consommation de gaz dans la pile. De plus, les turbulences créées par les mouvements brutaux du gaz peuvent améliorer le fonctionnement en présence d'azote. Cependant, si une trop grande quantité d'azote est présente, il est nécessaire d'effectuer une purge du surplus d'azote. on détecte la présence d'une trop grande quantité d'azote par la constatation d'une baisse de performances de la pile au moment de la chute de pression. Dans le premier exemple, la présence de la capacité 2 permet de limiter les pertes d'hydrogène, car pour purger l'azote, on ferme la vanne 31 séparant la capacité 2 et la pile 1, et on ouvre la capacité 2 vers l'extérieur, ce qui évacue une partie du mélange appauvri en hydrogène qui s'y trouve (le tiers pour un fonctionnement à 1,5 bars) ; lors du retour aux conditions de fonctionnement normal, on augmente le taux d'hydrogène dans la partie anode, et on remplace une partie du mélange appauvri par de l'hydrogène neuf (1/6^{ème} ici).

Sur la figure 3, les moyens de liaison 3 comprennent à nouveau un conduit de sortie 30 et une vanne de sortie 31 interposée dans ce conduit ; de plus, la capacité 2 comporte une sortie 22 reliée par un circuit de retour 5 à la pile 1, afin d'y réinjecter l'hydrogène contenu dans la capacité, au lieu de l'évacuer de la capacité au moyen de l'organe de purge 21 qui sert alors uniquement à évacuer l'eau et l'azote ; à cette fin, le circuit de retour 5 comporte une pompe 50 interposée dans un conduit 51 du circuit de retour reliant la sortie de la capacité ici au circuit d'entrée 4 ; un organe de purge 52 est également relié à la sortie de la pompe 50.

Le dispositif représenté sur cette figure 3 permet d'effectuer des purges violentes et régulières tout en remettant l'hydrogène en circulation puisqu'on diminue la pression dans la capacité 2 au moyen de la pompe 50 par laquelle on réinjecte l'hydrogène contenu dans la capacité, par exemple en amont de la pile 1 (à proximité immédiate de l'entrée 11 ou plus en amont), ou même en aval de la pile mais en amont de la vanne de sortie 31 (en trait interrompu sur la figure 3), l'hydrogène étant alors réintroduit dans la pile par la sortie 12 de celle-ci. Avec ce dispositif, on ferme la vanne de sortie 31, et on diminue la pression dans la capacité jusqu'à la valeur P-ΔP ; lorsque l'on atteint cette valeur, on ouvre la vanne de sortie 31, et ainsi on établit un courant de gaz à croissance rapide de la pile à la capacité, transportant de l'eau à l'état liquide contenue dans la pile, dans la capacité, en vue de son évacuation.

ce dispositif et ce procédé permettant une recirculation de l'hydrogène imposent l'entretien d'une pompe. Cependant, cette solution présente pour avantage, par rapport à la technique antérieure faisant appel à un circulateur, que la pompe n'a pas à faire circuler de grandes quantités d'hydrogène sous un faible ΔP, mais simplement à faire chuter la pression dans la capacité dans l'intervalle de temps qui sépare deux purges. Dans le même exemple que précédemment (pile de 30kW et 24 l), avec une purge toutes les deux minutes sous une différence de pressions de 0,5 bar, le débit est de 6 Nl/mn, et peut ainsi être assuré par une pompe miniature de quelques watts. Mais l'avantage fondamental de ce dispositif et de ce procédé est que l'on ne met pas la pile en dépression au cours de la purge, et qu'il n'y a donc aucune baisse de performances même légère au cours de cette mise en dépression, sauf quand la capacité reçoit de l'azote, ce qui permet de détecter le moment où la capacité doit être purgée.

Les dispositifs des figures 1, 2 et 3 nécessitent de purger la capacité pour éliminer l'azote et diverses impuretés ; ils peuvent être munis, afin de ne réinjecter dans la pile que de l'hydrogène et de purger les impuretés avec une perte minimum de ce gaz, de moyens de purification par exemple au palladium, à membrane organique ou à tamis moléculaire.

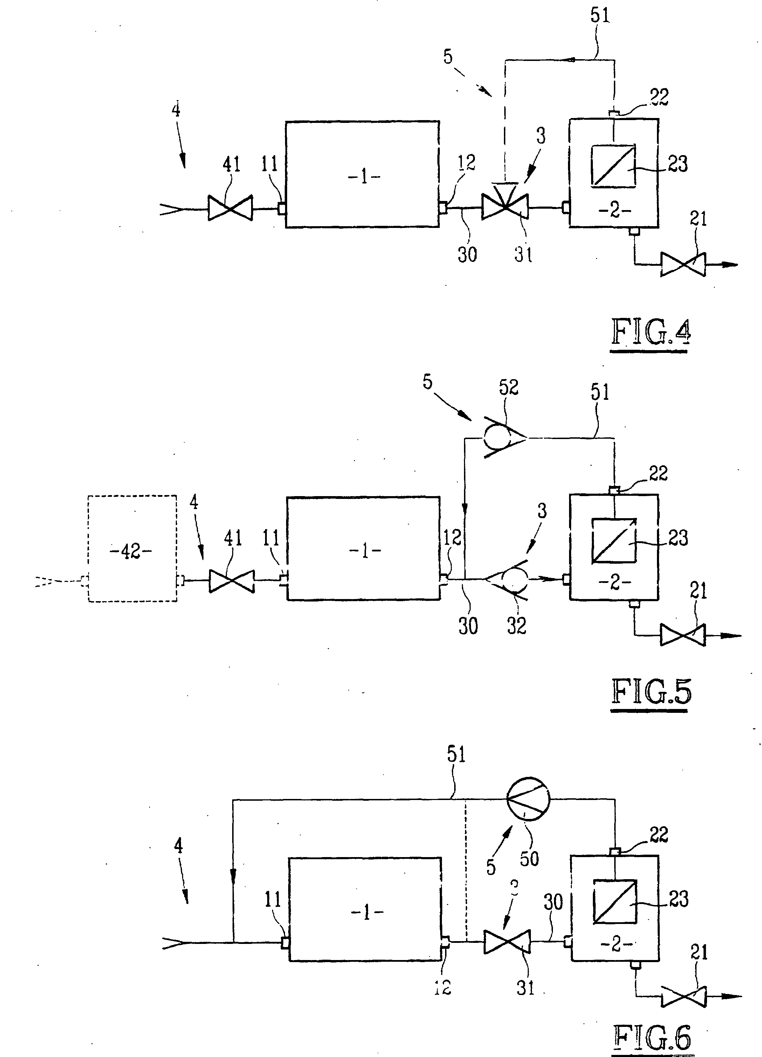

Sur la figure 4, les moyens de liaison 3 comprennent un conduit de sortie 30 et une vanne de sortie 31 du type à trois voies. La capacité 2 est munie d'un appareil de séparation 23 ici à membrane pour récupérer l'hydrogène présent dans celle-ci. La sortie de cet appareil 23 est reliée par un circuit de retour 5 comprenant un conduit 51 à une deuxième entrée (troisième voie) de la vanne 31. Le dispositif comporte également une vanne d'entrée 41 dans son circuit d'entrée 4, et un organe de purge 21 pour la capacité, tel qu'une vanne. Le procédé mis en oeuvre dans ce dispositif qui est un perfectionnement de celui de la figure 1, est le suivant : en vue de la purge, on ferme la vanne d'entrée 41, et on met l'entrée de la vanne de sortie 31 en communication avec la sortie 22 de l'appareil de séparation 23 de telle sorte que la pile 1 aspire le contenu de la capacité 2 à travers la membrane de l'appareil de séparation 23 ; on attend que la pression dans la capacité atteigne la valeur P-ΔP ou se stabilise à une valeur supérieure (ce qui signifie alors qu'il n'y a presque plus que de l'azote et des impuretés dans la capacité) ; puis on ferme la vanne de sortie 31 et on ouvre la vanne d'entrée 41 ; après quoi on purge la capacité si la pression s'est stabilisée à une valeur supérieure à P-ΔP (ou à une valeur prédéterminée), pour éliminer au moins une partie des impuretés ; ainsi, on atteint une valeur P-ΔP (par exemple voisine de la pression atmosphérique) dans la capacité ; enfin, on met l'entrée de la vanne de sortie 31 en communication avec l'entrée de la capacité par le conduit de sortie 30, et ainsi on purge la pile comme cela est décrit pour le dispositif de la figure 1.

En variantes (non représentées) :
- on peut brancher en sortie de purge de la capacité, une pompe d'aspiration des impuretés permettant d'atteindre une pression plus faible dans la capacité et d'éliminer plus d'impuretés ;
- on peut remplacer la vanne de sortie 31 à trois voies par une vanne conventionnelle et deux clapets, à savoir un clapet de retour pour le pompage d'hydrogène (sens allant de l'appareil de séparation 23 vers la pile), et un clapet de purge (sens allant de la pile vers la capacité).

Sur la figure 5, représentant un dispositif qui est un développement de celui de la figure 2, où les moyens de liaison comprennent un conduit de sortie 30 mais pas de vanne de sortie ; en effet, la vanne de sortie est ici remplacée par un clapet principal 32 dont le sens passant va de la pile 1 vers la capacité 2, et un circuit de retour 5 comporte un clapet 52 de retour pour le pompage d'hydrogène qui relie l'appareil de séparation 23 à l'amont du clapet principal 32 avec un sens passant allant de cet appareil 23 vers l'amont. Lors de l'aspiration, déjà décrite en relation avec le dispositif de la figure 4, le clapet 52 de pompage d'hydrogène s'ouvre et permet le transfert d'hydrogène de la capacité à la pile, ce qui diminue la pression dans la capacité ; quand il n'y a plus d'hydrogène dans la capacité, la pression baisse encore dans la pile, mais ne peut plus baisser dans la capacité ; si l'on purge la capacité, le clapet principal 32 ne s'ouvre pas dans la mesure où la pile reste à une pression plus basse que la capacité ; après que l'on a refermé l'organe de purge 21, on ouvre la vanne d'entrée 41, et ainsi on établit le courant de gaz de purge comme dans le cas de la figure 2.

Avec les dispositifs des figures 4 et 5, on peut aussi réaliser la purge de la pile sans fermer l'organe de purge de la capacité, en choisissant une géométrie de la capacité qui favorise l'effet de piston exercé par le gaz sortant de la pile on élimine ainsi une plus grande partie des impuretés accumulées.

Sur la figure 6, qui représente un dispositif qui est un développement de celui de la figure 3, les moyens de liaison 3 comprennent également un conduit de sortie 30 et une vanne de sortie 31 interposée dans ce conduit ; la capacité 2 est munie d'un appareil de séparation 23 d'hydrogène, à membrane ; c'est cet appareil 23 qui est relié par un circuit de retour 5 à l'entrée 11 de la pile ou au circuit d'entrée 4, ou encore en amont de la vanne de sortie 31 (en trait interrompu sur la figure 6) afin de réinjecter dans la pile l'hydrogène contenu dans la capacité, le circuit de retour 5 comprenant une pompe 50 incorporée dans le conduit de retour 51 comme décrit concernant la figure 3. Comme précédemment, l'hydrogène est donc aspiré de la capacité vers la pompe, cette fois par l'intermédiaire de la membrane sélective, et ensuite transmis de la pompe à la pile ; le procédé de purge est à cette différence près le même que celui qui a été décrit en référence à la figure 3. Comme cela est le cas pour les dispositifs des figures 4 et 5, on détecte la nécessité de purger la capacité quand la pression dans celle-ci se stabilise au-dessus de la pression habituelle.

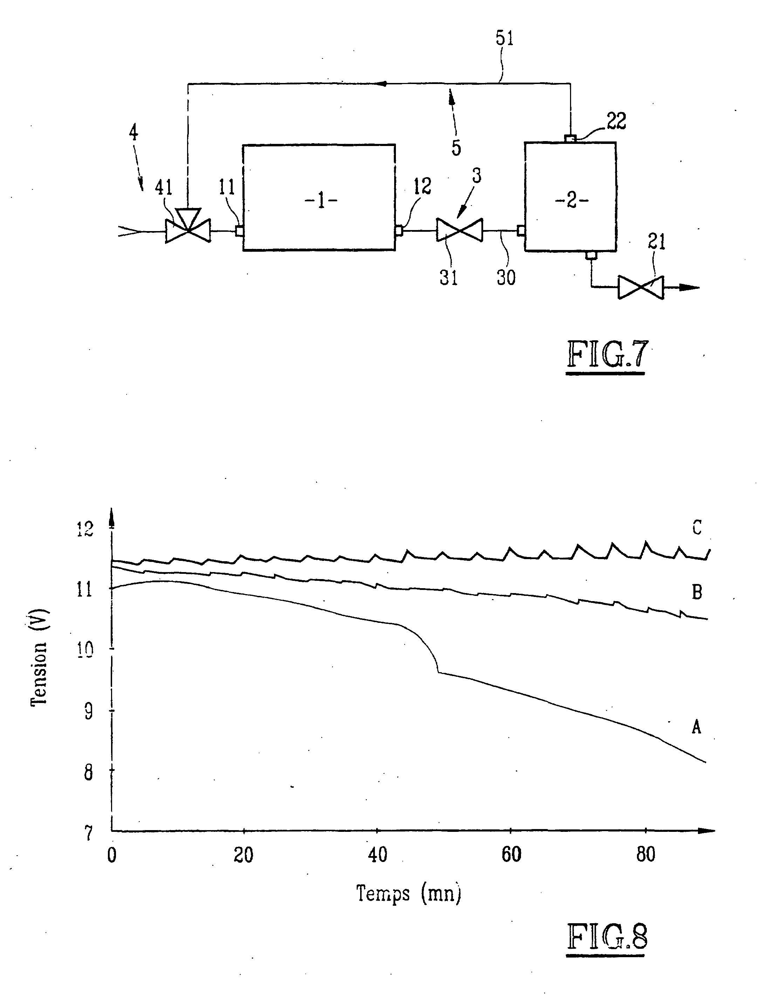

Sur la figure 7, est représenté un dispositif qui est également une variante du dispositif de la figure 1 ; on a donc là encore une vanne de sortie 31 entre la pile et la capacité, un organe de purge 21 pour la capacité, et une vanne d'entrée 41, dans le même montage ; simplement, la vanne d'entrée 41 conventionnelle est remplacée par une vanne à trois voies dont la deuxième entrée (troisième voie) est reliée par un circuit de retour 5 comprenant un conduit 51, à la sortie 22 de la capacité.

Comme dans les cas précédents où il existe une vanne de sortie 31, celle-ci peut être en fonctionnement normal, ouverte ou fermée ; la vanne d'entrée 41 relie la pile à l'alimentation en hydrogène ; le moment venu, on inverse la position de la vanne d'entrée et ainsi on diminue la pression dans la capacité en transférant du gaz de celle-ci dans la pile ; puis, on ferme la vanne de sortie 31 si elle était ouverte ; lorsque la pression dans la capacité est descendue à la valeur choisie, on inverse la position de la vanne d'entrée 41 pour remettre la pile en communication avec l'alimentation en gaz, et on ouvre la vanne de sortie 31 et ainsi on établit un courant de gaz à croissance rapide transportant de l'eau de la pile à la capacité ; après quoi on referme la vanne de sortie 31 pour isoler la pile et la capacité, si telles sont les conditions du fonctionnement normal.

Le même type de variante peut être réalisé à partir de la figure 2, et ainsi, dans une forme de réalisation non représentée, on modifie la figure 2 en remplaçant la vanne d'entrée 41 conventionnelle par une vanne à trois voies dont la deuxième entrée est reliée par un circuit de retour à une sortie de la capacité.

Naturellement, le problème d'apparition de l'eau ne se limite pas au circuit d'hydrogène d'une pile à combustible, mais il existe aussi dans le circuit d'oxygène.

Les exemples décrits ci-dessus qui ne font pas appel à des techniques spécifiques à l'hydrogène, à savoir ceux des figures 1, 2, 3 et 7, sont applicables également au circuit d'oxygène pur de telles piles hydrogène-oxygène. D'ailleurs, la plus grande quantité d'eau présente du côté oxygène oblige à des purges plus fréquentes, mais dont la fréquence dépend comme pour l'hydrogène, de la pile ; en revanche, on est alors moins gêné par les problèmes d'accumulation d'autres gaz.

On notera que la fréquence des purges de la capacité (en eau, en azote, etc.) peut être très inférieure à celle des purges de la pile.

On peut constater l'efficacité de la mise en oeuvre de l'invention, sur la figure 8 qui montre dans plusieurs cas la tension délivrée par une pile à combustible telle que celle prise comme exemple précédemment, en fonction du temps : la courbe A représente la tension délivrée par la pile en fonction du temps lorsque l'on ne purge pas cette pile, tension dont la rapidité de la décroissance est caractéristique ; la courbe B représente la tension pour une pile identique dont on purge le circuit d'hydrogène toutes les cinq minutes, selon le procédé antérieur, en perdant de l'hydrogène à chaque purge ; la courbe C représente la tension pour une pile identique dont on purge le circuit d'hydrogène au moyen du procédé du dispositif selon l'invention illustré par la figure 1. Cette dernière courbe illustre parfaitement la constance des performances dans le temps d'une pile ainsi purgée selon l'invention.

## Revendications

1. Procédé de purge de circuit de gaz de pile à combustible dans laquelle on introduit au moins un gaz provenant d'une alimentation en gaz à une entrée (11) de circuit de gaz de la pile et on évacue des produits résiduels à une sortie (12) d'évacuation ou de purge de circuit de gaz de la pile, via une capacité (2) ayant une entrée reliée par des moyens de liaison (3) à la sortie (12) de la pile, où, pour évacuer, à intervalles réguliers ou non, par la sortie (12), au moins de l'eau à l'état liquide se trouvant dans le circuit de gaz, on réduit temporairement l'écart de pressions de gaz dans des régions de référence respectivement de la pile et de la capacité, on diminue la pression de gaz dans la pile et dans la capacité, puis on établit, à partir de gaz provenant de l'alimentation, un courant de gaz à croissance rapide passant par les moyens de liaison (3), de la pile à la capacité, afin de transporter simultanément de l'eau à l'état liquide contenue dans la pile, dans la capacité.

2. Procédé selon la Revendication 1, **caractérisé en ce que**, pour réduire l'écart de pressions entre la pile (1) et la capacité (2), on interrompt l'arrivée de gaz provenant de l'alimentation à l'entrée (11) de la pile et on diminue la pression dans la capacité et dans la pile en laissant la pile consommer du gaz de la pile et de la capacité sans réalimenter la pile en gaz, puis on réalimente la pile pour faire remonter la pression au moins dans celle-ci.

3. Procédé selon la Revendication 2, **caractérisé en ce que**, pour établir un courant de gaz à croissance rapide, on isole tout d'abord temporairement la capacité de la pile en obturant les moyens de liaison (3).

4. Procédé selon la revendication 3, **caractérisé en ce que**, pour réalimenter la pile (1), on emmagasine préalablement du gaz neuf en amont de l'entrée (11) de la pile (1) tandis que l'arrivée de gaz à cette entrée est interrompue.

5. Procédé selon la revendication 1, **caractérisé en ce que**, pour diminuer la pression de gaz dans la capacité (2), on isole la capacité de la pile (1) en obturant les moyens de liaison (3), et on pompe du gaz de la capacité et on le transfère dans la pile à travers un circuit de retour (5) qui le réinjecte en amont ou en aval de la pile.

6. Procédé selon la revendication 1, **caractérisé en ce que**, lors de la diminution de pression dans la capacité (2) et la pile (1), on fait passer une partie de l'hydrogène contenu dans la capacité vers la sortie (12) de la pile à travers un appareil de séparation de gaz, et, si la pression dans la capacité ne descend pas jusqu'à une valeur prédéterminée, on purge la capacité, puis on établit le courant de gaz à croissance rapide.

7. Procédé selon l'une des revendications 1 à 6, **caractérisé en ce que** l'on diminue la pression de gaz au moins dans la pile et la capacité (2) jusqu'à atteindre une valeur prédéterminée voisine de la pression atmosphérique.

8. Dispositif pour la mise en oeuvre du procédé selon l'une des revendications 1 à 7, comprenant une pile à combustible (1) comportant au moins deux circuits de gaz dont au moins l'un comporte une entrée (11) de circuit de gaz reliée par un circuit d'entrée (4) à une alimentation en gaz et une sortie (12) d'évacuation ou de purge de circuit de gaz, une capacité (2) comportant une entrée reliée à la sortie (12) de la pile par des moyens de liaison (3) et au moins deux sorties, et un circuit de retour (5) partant d'une sortie (22) de la capacité (2) pour réinjecter du gaz provenant de la capacité vers la pile (1), **caractérisé en ce qu'**il comporte au moins une vanne (31, 41) à trois voies dans le circuit de retour, ayant une entrée reliée à l'entrée (11) ou à la sortie (12) de la pile.

9. Dispositif selon la revendication 8 **caractérisé en ce que** la capacité (2) comporte un appareil (23) de séparation de gaz raccordé au circuit de retour.

## Patentansprüche

1. Spülverfahren des Gaskreislaufes einer Brennstoffzelle, in welche mindestens ein Gas eingeleitet wird, das aus einer Gasversorgung an einem Eingang (11) des Gaskreislaufes der Zelle stammt, und wobei die Rückstandsprodukte an einem Ausgang (12) zur Ableitung oder zur Spülung des Gaskreislaufes der Zelle über eine Kapazität (2) abgeleitet werden, die einen Eingang aufweist, der durch Verbindungsmittel (3) mit dem Ausgang (12) der Zelle verbunden ist, wobei, um mindestens Wasser im flüssigen Zustand, das sich in dem Gaskreislauf befindet, in regelmäßigen Abständen oder nicht durch den Ausgang (12) abzuleiten, der Gasdruckunterschied vorübergehend in den Referenzbereichen jeweils der Zelle und der Kapazität reduziert wird, wobei der Gasdruck in der Zelle und in der Kapazität abgesenkt wird, wobei danach, anhand von Gas, das aus der Versorgung stammt, ein Gasstrom mit steilem Anstieg aufgebaut wird, der durch die Verbindungsmittel (3) von der Zelle zu der Kapazität geht, damit gleichzeitig Wasser im flüssigen Zustand, das in der Zelle vorhanden ist, in die Kapazität transportiert wird.

2. Verfahren nach Anspruch 1, **dadurch gekennzeichnet, dass**, um den Druckunterschied zwischen der Zelle (1) und der Kapazität (2) zu reduzieren, die Zufuhr von Gas unterbrochen wird, das aus der Versorgung an dem Eingang (11) der Zelle stammt, und der Druck in der Kapazität und in der Zelle vermindert wird, indem die Zelle Gas der Zelle und der Kapazität aufbrauchen kann, ohne die Zelle erneut mit Gas zu versorgen, wobei danach die Zelle wieder versorgt wird, um mindestens in ihr den Druck wieder ansteigen zu lassen.

3. Verfahren nach Anspruch 2, **dadurch gekennzeichnet, dass**, um einen Gasstrom mit steilem Anstieg aufzubauen, zuerst die Kapazität durch Absperren der Verbindungsmittel (3) vorübergehend von der Zelle getrennt wird.

4. Verfahren nach Anspruch 3, **dadurch gekennzeichnet, dass**, um die Zelle (1) wieder zu versorgen, frisches Gas stromaufwärts des Einganges (11) der Zelle (1) im Vorhinein gespeichert wird, während die Gaszufuhr an diesem Eingang unterbrochen wird.

5. Verfahren nach Anspruch 1, **dadurch gekennzeichnet, dass**, um den Gasdruck in der Kapazität (2) zu vermindern, die Kapazität von der Zelle (1) getrennt wird, indem die Verbindungsmittel (3) abgesperrt werden, und Gas zu der Kapazität gepumpt und durch einen Rückführkreislauf (5) in die Zelle befördert wird, der es stromaufwärts und stromabwärts der Zelle wieder hineinpresst.

6. Verfahren nach Anspruch 1, **dadurch gekennzeichnet, dass**, während der Druckverminderung in der Kapazität (2) und in der Zelle (1), ein Teil des in der Kapazität enthaltenen Wasserstoffes durch einen Gasabscheider hindurch zu dem Ausgang (12) der Zelle übergeleitet wird, und wenn der Druck in der Kapazität nicht bis auf einen vorbestimmten Wert abfällt, die Kapazität gespült wird, worauf der Gasstrom mit steilem Anstieg aufgebaut wird.

7. Verfahren nach einem der Ansprüche 1 bis 6, **dadurch gekennzeichnet, dass** der Gasdruck mindestens in der Zelle und in der Kapazität (2) vermindert wird, bis ein vorbestimmter Wert in der Nähe des atmosphärischen Druckes erreicht wird.

8. Vorrichtung zur Durchführung des Verfahrens nach einem der Ansprüche 1 bis 7 mit einer Brennstoffzelle (1), die mindestens zwei Gaskreisläufe umfasst, von denen mindestens einer einen Eingang (11) eines Gaskreislaufes umfasst, der mit einem Eingangskreislauf (4) mit einer Gasversorgung und einem Ausgang (12) zur Ableitung oder zur Spülung des Gaskreislaufes verbunden ist, einer Kapazität (2), die einen Eingang, der mit dem Ausgang (12) der Zelle durch Verbindungsmittel (3) verbunden ist, und mindestens zwei Ausgänge umfasst, und einem Rückführkreislauf (5), der von einem Ausgang (22) der Kapazität (2) ausgeht, um Gas, das aus der Kapazität stammt, in Richtung der Zelle (1) zurückzupressen, **dadurch gekennzeichnet, dass** sie mindestens ein Dreiwegeventil (31, 41) in dem Rückführkreislauf umfasst, das einen Eingang aufweist, der mit dem Eingang (11) oder dem Ausgang (12) der Zelle verbunden ist.

9. Vorrichtung nach Anspruch 8, **dadurch gekennzeichnet, dass** die Kapazität (2) einen Gasabscheider (23) umfasst, der an den Rückführkreislauf angeschlossen ist.

## Claims

1. Method of purging a gas circuit of a fuel cell in which at least one gas coming from a gas supply is introduced into a gas circuit inlet (11) of the cell and waste products at a gas circuit purge or discharge outlet (12) of the cell are discharged via a tank (2) having an inlet connected by connecting means (3) to the outlet (12) of the cell, where, in order to discharge, at regular or irregular intervals, via the outlet (12), at least water in the liquid state found in the gas circuit, the difference in gas pressures in reference regions of the cell and of the tank respectively are temporarily reduced, the gas pressure in the cell and in the tank is reduced and then a rapidly surging stream of gas is established, from gas emanating from the supply, the said stream of gas flowing via the connecting means (3) from the cell to the tank, so as at the same time to transport water in the liquid state contained in the cell to the tank.

2. Method according to Claim 1, **characterized in that**, to reduce the pressure difference between the cell (1) and the tank (2), the inflow of gas coming from the supply is interrupted at the inlet (11) of the cell and the pressure in the tank and in the cell are reduced, leaving the cell to consume gas from the cell and from the tank, without resupplying the cell with gas, and then the cell is resupplied in order to raise the pressure at least in the latter.

3. Method according to Claim 2, **characterized in that**, to establish a rapidly surging stream of gas, the tank is firstly temporarily isolated from the cell by closing off the connecting means (3).

4. Method according to Claim 3, **characterized in that**, to resupply the cell (1), fresh gas is stored beforehand upstream of the inlet (11) of the cell (1) while the inflow of gas at this inlet is interrupted.

5. Method according to Claim 1, **characterized in that**, to reduce the gas pressure in the tank (2), the tank is isolated from the cell (1) by closing off the connecting means (3), and gas is pumped from the tank and transferred to the cell through a return circuit (5) that reinjects it upstream or downstream of the cell.

6. Method according to Claim 1, **characterized in that**, when lowering the pressure in the tank (2) and the cell (1), some of the hydrogen contained in the tank is made to flow towards the outlet (12) of the cell through a gas separation unit and, if the pressure in the tank does not drop to below a predetermined value, the tank is purged and the rapidly surging stream of gas is established.

7. Method according to one of Claims 1 to 6, **characterized in that** the gas pressure at least in the cell and the tank (2) is reduced until it reaches a predetermined value close to atmospheric pressure.

8. Device for implementing the method according to one of Claims 1 to 7, comprising a fuel cell (1) having at least two gas circuits, at least one of which includes a gas circuit inlet (11) connected via an inlet circuit (4) to a gas supply and a gas circuit purge or discharge outlet (12), a tank (2) having an inlet connected to the outlet (12) of the cell via connecting means (3) and at least two outlets, and a return circuit (5) starting from an outlet (22) of the tank (2) in order to reinject gas coming from the tank into the cell (1), **characterized in that** it includes at least one three-way valve (31, 41) in the return circuit, having an inlet connected to the inlet (11) or to the outlet (12) of the cell.

9. Device according to Claim 8, **characterized in that** the tank (2) includes a gas separation unit (23) connected to the return circuit.
